# EUROPÄISCHE PATENTANMELDUNG

(11) **EP 1 313 261 A1**
(43) Veröffentlichungstag der Anmeldung: **21.05.2003**
(21) Anmeldenummer: 01127122.8
(22) Anmeldetag: 15.11.2001
(51) Int. Cl.: H04L 12/24, H04Q 3/00, H04L 12/66, H04L 29/06

(54) **Einrichtung und Verfahren zum Steuern eines aus mehreren Netzen bestehenden Telekommunikationssystems**

(71) Anmelder: Siemens Aktiengesellschaft, 80506 München (DE)
(72) Erfinder: Hinterberger, Gerald, 3400 Klosterneuburg (AT); Lemp, Robert, 2100 Leobendorf (DE)
(74) Vertreter: Peham, Alois, Dipl.-Ing.

(57) **Zusammenfassung**

Einrichtung zum Steuern eines aus mehreren Netzen (TN, TMN DCN) bestehenden Telekommunikationssystems (TS) umfassend Service-Management-Einrichtungen (SME(OSF, WS)) und Netzwerkelemente (NE) die über Übertragungskanäle (ÜK) eines Datenkommunikationsnetzwerks (DCN) zur Informationsübermittlung miteinander verbindbar sind um Steuerinformationseinheiten (STI) zu übertragen, wobei in zumindest einem Übertragungskanal (ÜK) ein Kommunikationsadapter (KA) vorhanden ist um in diesem Übertragungskanal (ÜK) verwendete unterschiedliche Kommunikationssystemarchitekturen aneinander anzupassen.

## Beschreibung

### Bezeichnung der Erfindung

Die Erfindung bezieht sich auf eine Einrichtung und ein Verfahren zum Steuern eines aus mehreren Netzen bestehenden Telekommunikationssystems.

### Stand der Technik

Telekommunikationssysteme ermöglichen den Transfer bzw. den Austausch von Informationen zwischen räumlich entfernten Kommunikationsteilnehmern. Weit verbreitet sind Telekommunikationssysteme, bei denen der Übertragungsweg durch ein Teilstreckennetz mit einer Menge von Vermittlungseinrichtungen und einer Menge von leitungsgebundenen bzw. drahtlosen Punk-zu-Punkt-Verbindungen gebildet wird. Es ist Aufgabe dieser Vermittlungseinrichtungen abschnittsweise die Nachrichten durch Auswahl des jeweils günstigsten Weges so zu übertragen, dass eine Telekommunikationsdsienstleitung mit möglichst hoher Zuverlässigkeit und Wertschöpfung erbracht wird. Eine aktuell häufig eingesetzte Vermittlungseinrichtung ist das sogenannte "Elektrische Wählsystem Digital", kurz "EWSD", der Firma Siemens AG. Anfangs ausschließlich auf die Vermittlung leitungsorientierter Fernsprechverbindungen ausgelegt, müssen zukünftig neben der Sprachinformation auch Daten übertragen werden.
Unvergleichlich ist das Wachstum der Teilnehmerzahlen des Internet, das ursprünglich als Datennetz für die weiträumige Vernetzung von Großrechnern konzipiert wurde. Grundsätzlich ist dieses Netz aber auch für die Übertragung von Informationen mit Echtzeitcharakter, wie beispielsweise Sprache und Bewegtbilder, geeignet. Die Leistungsfähigkeit des Internets nimmt ständig zu.

Die Telekommunikationsdienstleistungen herkömmlicher, leitungsvermittelnder Netze wachsen mit jenen des Internets immer mehr zusammen, was auch als Konvergenz bezeichnet wird. Grundsätzlich ist für den Betrieb und für die Aufrechterhaltung eines Netzes ein Management des Netzes erforderlich, bei dem sich zwei Führungsaufgaben unterscheiden lassen: Zum einen ist es die Sicherstellung der Kommunikation für die Kommunikationsteilnehmer, zum anderen, die Verwaltung und der Betrieb der Geräte, die diese Kommunikation technisch ermöglichen. Ersteres wird als Netzwerk-Management, letzteres als Systemmanagement bezeichnet.
Das Netzwerk-Management von aktuell eingesetzten Telekommunikationsnetzen wird immer aufwendiger. Ist bereits in einem leitungsorientierten Netz mit mehreren tausend vernetzten Stationen die Steuerung des Netzes manuell wirtschaftlich nicht mehr handhabbar, so stellt das Management eines modernen Telekommunikationsnetzes, welches heute Informationsströme mit und ohne Echtzeitcharakter, wie beispielsweise Sprache und Daten gleichzeitig vermittelt und überträgt, ein sehr komplexes technisches und organisatorisches Problem dar.

Für das Netzwerk-Management sind Architekturen bekannt, die dem Telekommunikationsnetz überlagert werden. In den ITU-Empfehlungen, insbesondere der Empfehlung M.3010, ist eine derartige Architektur beschrieben.
Grundsätzlich erfolgt die Führung und die Steuerung von Telekommunikationsnetzen durch Steuer-Informationen, die zu Einheiten und Blöcken zusammengefasst sind und zwischen den Netzwerkelementen und sogenannten Service-Management-Einrichtungen übertragen werden. Letztere umfassen im Folgenden Einrichtungen auf einer höheren Hierarchieebene. Sie können durch Workstations gebildet werden, welche interaktiv, dh. in Form eines Dialogs, durch eine Bedienperson, eine Einflussnahme auf das zu steuernde Netz ermöglichen und Informationen aus dem Netz abgreifen.

Werden mehrere Netze mit unterschiedlichen Kommunikationsarchitekturen zusammengeschaltet, müssen die unterschiedlichen Architekturen aneinander angepasst werden. Es ist bekannt, hierfür sogenannte Communication-Server zu verwenden. Communication-Server sind Rechner, die mit Softwarekomponenten ausgestattet sind um die geforderte Anpassung erbringen zu können.
Die Zuverlässigkeit zusammengeschalteter Netze hängt u.a. auch von der Ausfallwahrscheinlichkeit dieser Rechner ab. Die Führung und Steuerung eines aus mehreren Netzen bestehenden Telekommunikationssystems kann durch einen derartigen Rechnerausfall stark beeinträchtigt werden. Beispielsweise kann das Abrechnungsmanagement, bei dem vergleichsweise große Billing-Datenmengen aus dem Netz ermittelt und an eine übergeordnete Führungsebene übertragen werden müssen, durch einen Serverausfall empfindlich gestört sein. Die vom Netzwerk-Management erbrachte Dienstleistung ist dann oft stark beeinträchtigt. Es kann auch dazu kommen, dass durch Störungen im Netz zwischen Server und Netzperipherie bzw. durch den Ausfall des Communication-Servers bestimmte Service- bzw. Dienstleistungen überhaupt nicht mehr erbracht werden können.

### Darstellung der Erfindung

Aufgabe der Erfindung ist es, eine Einrichtung und ein Verfahren anzugeben, mit Hilfe derer das Steuern eines aus mehreren Netzen bestehenden Telekommunikationssystems wirkungsvoller und zuverlässiger als bisher gelingt.

Diese Aufgabe wird durch die technischen Merkmale des Patentanspruchs 1 gelöst.
Die Erfindung sieht einen Kommunikationsadapter (im folgenden auch kurz Adapter genannt) vor, der in den Übertragungskanal zwischen einer Service-Management-Einrichtung und einem Netzwerkelement geschaltet ist und dort unterschiedliche Kommunikationsarchitekturen aneinander anpasst. Der Kommunikationsadapter ist den Netzelementen zugeordnet und liegt topologisch nahe zu diesen. Dadurch entfällt ein im Stand der Technik vorhandenes Datennetz, das Datenentz das Communication-Server und Netzelemente verbindet. Die Erfindung vereinfacht insgesamt den Aufbau des Telekommunikations-Management-Netzwerks. Verglichen mit dem Communication Server ist der Kommunikationsadapter technisch einfacher aufgebaut, da er weniger Bauelemnte aufweist und kompakter gebaut werden kann. Der Adapter besitzt dadurch eine höhere Zuverlässigkeit, m.a.W. das System hat eine höhere Ausfallsicherheit. Der Adadpter ist vergleichsweise kostengünstig herstellbar. Die Inbetriebnahme ist leichter, die Wartung einfacher und daher schneller möglich.

Als Folge davon erhöht sich die Zuverlässigkeit des gesamten Netzwerkmanagements. Die Führungs- und Steuerungsaufgaben können wirkungsvoller und mit höherer Betriebssicherheit durchgeführt werden. Aufgrund der geringeren Übertragungszeiten ist das System weniger störanfällig. Der Adapter, der als hardcodiertes Programm in einem Bauelement oder in einer Baugruppe ausgeführt sein kann, arbeitet schneller und zuverlässiger als ein Windows NT Server. Bei Betrieb zeichnet sich die erfindungsgemäße Einrichtung durch eine einfache Wartbarkeit aus, da ein Bauelement oder ein Modul einfach getauscht werden kann. Es entfällt eine langwierige Installation und/oder Konfiguration.

Für den Betreiber des Telekommunikations-Management-Netzwerks ergibt sich durch die Erfindung eine Kostenersparnis: Kosten für die Anschaffung, die Wartung und den Betrieb eines zwischengelagerten Netzes entfallen. Die erbrachten Dienstleistungen können günstiger an den Kunden weiter verrechnet werden.

Gemäß einer Ausgestaltung der Erfindung ist im Kommunikationsadapter eine Speichereinrichtung mit einem Speicher vorgesehen. Der Adapter wirkt als Buffer. Durch diese Einrichtung ist es möglich, Informationseinheiten bei der blockweisen Datenübertragung zwischenzuspeichern. Die Zwischenspeicherung ermöglicht die Verwendung unterschiedlicher Übertragungsraten im Übertragungskanal. Es wird zwar nach wie vor die Übertragungsgeschwindigkeit durch den Streckenabschnitt mit der geringsten Bandbreite vorgegeben. Der Zwischenspeicher entkoppelt aber den Streckenabschnitte mit der geringeren Übertragungsrate von dem Streckenabschnitt mit der hohen Übertragungsrate. Dies hat zum einen den Vorteil, dass, bei einer blockweisen Übertragung, der Streckenabschnitt mit einer größeren Bandbreite nicht auf den mit der kleineren Bandbreite "warten" muss. Da die Daten im Buffer zwischenspeicherbar sind, ist die Schreibgeschwindigkeit des Zwischenspeichers, und nicht die niedrigere Bandbreite maßgebend. Umgekehrt ermöglicht die Erfindung, dass der Buffer mit Steuerinformationen von einem oder mehreren Netzwerkelementen mit vergleichsweise niedriger Geschwindigkeit beschrieben wird, dieser Speicherinhalt dann aber mit relativ hoher Übertragungsrate ausgelesen wird. Dies bedeutet, man kann die Zeit der Übertragung effektiver nutzen, indem man die freien Zeiten für die Sendung der gebufferten Daten verwendet.

Gemäß einer anderen Ausgestaltung der erfindungsgemäßen Einrichtung enthält der Kommunikationsadapter eine Konvertiereinrichtung. Diese beinhaltet wiederum mindestens ein Konvertierungsmodul welches bei der Informationsübermittlung die im Kanal übertragenen Steuerinformationseinheiten von einem ersten Übertragungsprotokoll und / oder einer ersten Übertragungsrate in ein zweites Übertragungsprotokoll (ÜP2) und / oder zweite Übertragungsrate (ÜR2) umsetzt. In diesem Fall wirkt der Kommunikationsadapter als Buffer / Konverter. Er ermöglicht die Verbindung von Netzen mit unterschiedlichen Übertragungsstandards und/oder auch unterschiedlichen Übertragungsgeschwindigkeiten.

Bevorzugt werden die Steuerinformationseinheiten zu Datenblöcken zusammengefasst. Auf diese Weise werden die aus dem Netz gewonnen Informationen bereits im Vorfeld anwendungsspezifisch geordnet.

Von besonderem Vorteil ist, wenn zumindest eine Service-Management-Einrichtungen über den zumindest einen Übertragungskanal mit zumindest einem Netzwerkelement, das als Vermittlungssystem ausgebildet ist, verbunden ist. Auf diese Weise können aktuell eingesetzte Vermittlungssysteme, wie beispielsweise das bereits oben erwähnte EWSD, über das TCP/IP (Transmission Control Protokoll / Internet Protokoll) kommunizieren. Der Standard TCP/IP nimmt heute weltweit eine Vormachtstellung unter den Transportprotokollen ein. Die Vermittlungssysteme sind dadurch auf einfache Weis an Weitverkehrsnetze anbindbar. Durch diese Anbindung können weit entfernt liegende Netzknoten einfach und sicher vernetzt werden. Das Management weit auseinander liegender Teilnetze wird effizienter.

Hierbei ist ganz besonders von Vorteil, wenn der Übertragungskanal sich in einen ersten Abschnitt, enthaltend eine Anzahl n erste Übertragungsleitungen, welche ein Vermittlungssystem (EWSD) mit dem Kommunikationsadapter verbinden, und in einen zweiten Abschnitt, enthaltend eine oder eine Anzahl m zweite Übertragungsleitung oder Übertragungsleitungen, gliedert. Auf diese Weise können in Betrieb befindliche Vermittlungssysteme weitgehend ohne aufwendige Veränderung von Hardware- oder Softwarekomponenten mit dem Internet vernetzt werden. Beim dieser Vernetzung verbinden physikalisch gesehen auf der einen Seite mehrere Übertragungsleitungen den Kommunikationsadapter mit einer oder mehreren EWSD. Auf der anderen Seite ist der Adapter durch eine Leitung, die vergleichsweise eine höhere Bandbreite aufweist, mit einem Datenkommunikationsnetz verbunden. Üblicherweise sind bei EWSD Vermittlungssysteme mehrere Leitung im Protokollstandard X.25 für die Anbindung an das Netzwerk-Management vorgesehen. Die Erfindung ermöglicht nun eine einfache Anbindung dieser weit verbreiteten Vermittlungssysteme an das Internet, ohne dass in den EWSD-Geräten selbst die Hardware oder die Software geändert werden muss. Gemäß der Erfindung gleicht der Adapter unterschiedliche Übertragungsgeschwindigkeiten und - protokolle aus. In Richtung des Netzwer-Mangements gesehen wirkt er für den Datenstrom der Datenpakete auf den X.25-Leitungen als Konzentrator, indem er diese Leitungen bündelt und den Datenstrom in einen schnellen Datenpaketstrom im TCP/IP-Format umsetzt. Der Datenpaketstrom im TCP/IP Format kann physikalisch beispielsweise auf einer Leitung im Ethernet-Standard zu den Service-Management-Einrichtungen übertragen werden.

Von ganz besonderem Vorteil ist, wenn die den Service anfordernden Service-Management-Einrichtungen mit dem Kommunikationsadapter und dem Vermittlungssystem innerhalb eines Client-Server-Systems in einer asymmetrischen Auftragsbeziehung stehen. Dh., der Kommunikationsadapter liegt hierarchisch zwischen EWSD und Service-Management-Einrichtung. Er übernimmt eine Doppelrolle: Einerseits erbringt er eine Dienstleistung gegenüber der anfordernden Service-Management-Einrichtung, andererseits fordert er selbst Dienste vom darunter liegenden Vermittlungssystem ab. Durch das Delegieren von Teilaufgaben an die Netzwerkperipherie wird das Management des Netzwerks entlastet. Steuerungsaufgaben können effizienter durchgeführt werden.

### Kurzbeschreibung der Zeichnungen

Die Erfindung wird nachstehend an Hand von mehreren Figuren näher erläutert. Es zeigen:
- Fig. 1: die Erfindung in einer vereinfachten Blockdarstellung;
- Fig. 2: eine bekannte Netzwerkmanagement-Einrichtung in schematischer Darstellung;

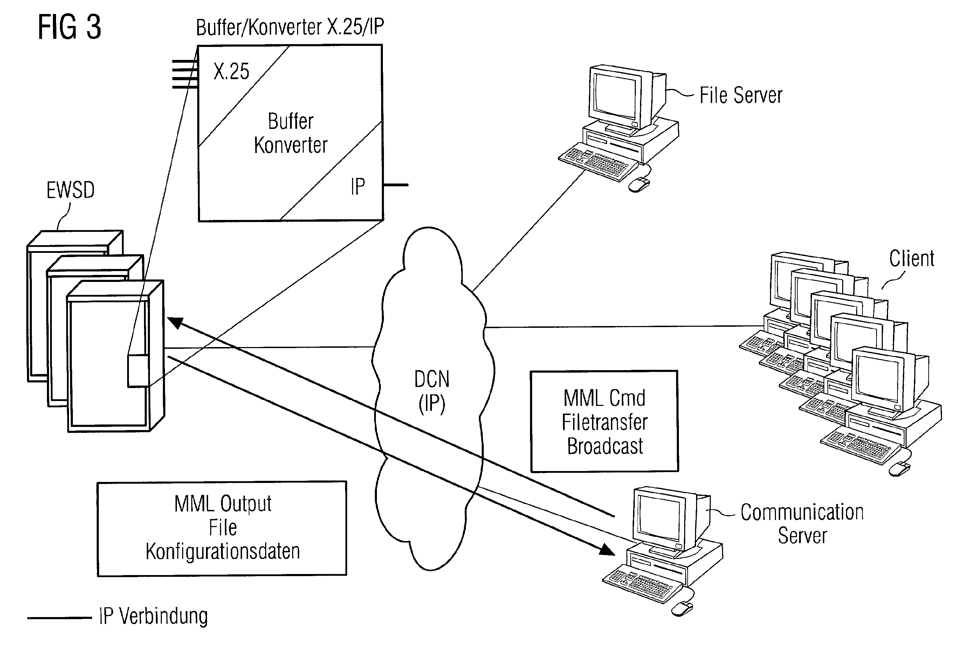

- Fig. 3: die erfindungsgemäße Einrichtung schematisch und stark vereinfacht;
- Fig. 4: eine Detaildarstellung der erfindungsgemäßen Einrichtung.

### Ausführung der Erfindung

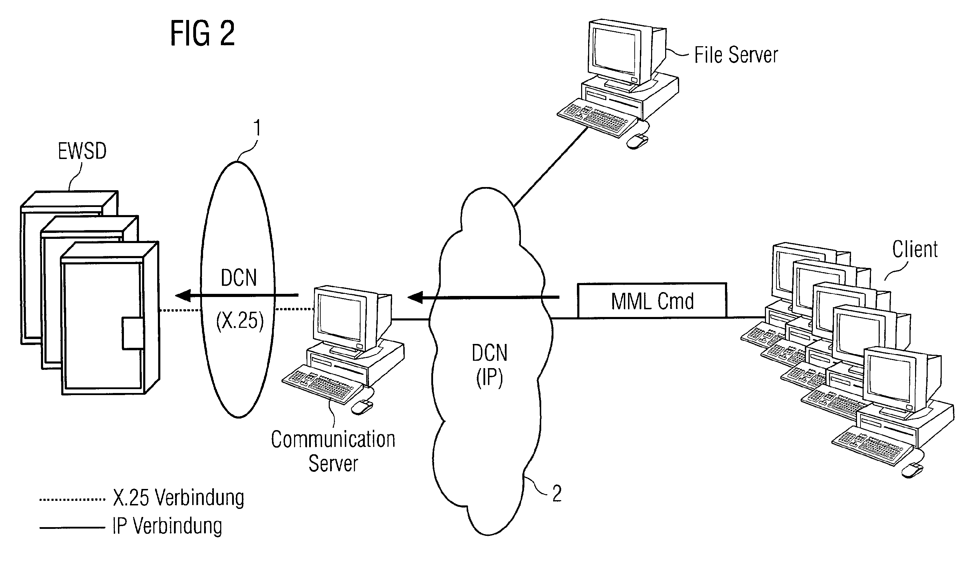

Zu den wichtigsten Aufgaben des Netzwerk-Managements gehört die Netzsteuerung, das Konfigurationsmanagement, das Fehlermanagement, das Leistungsmanagement, das Sicherheitsmanagement, und das Abrechnungsmanagement. Wie bereits erwähnt, erfolgt bei bekannten Telekommunikationsnetzwerken das Netzwerkmanagement durch überlagerte Architekturen. Diese sind im Stand der Technik über zwei Stufen an die Netzperipherie, die Netzwerkelemente, angebunden (Fig. 2): Ein erstes Netzwerk (1) verbindet mehrere Netzwerkelemente, hier Vermittlungssysteme EWSD, mit einem Communication-Server. Ein zweites Netzwerk 2 verbindet den Communication-Server mit File-Server und Client-Systemen.

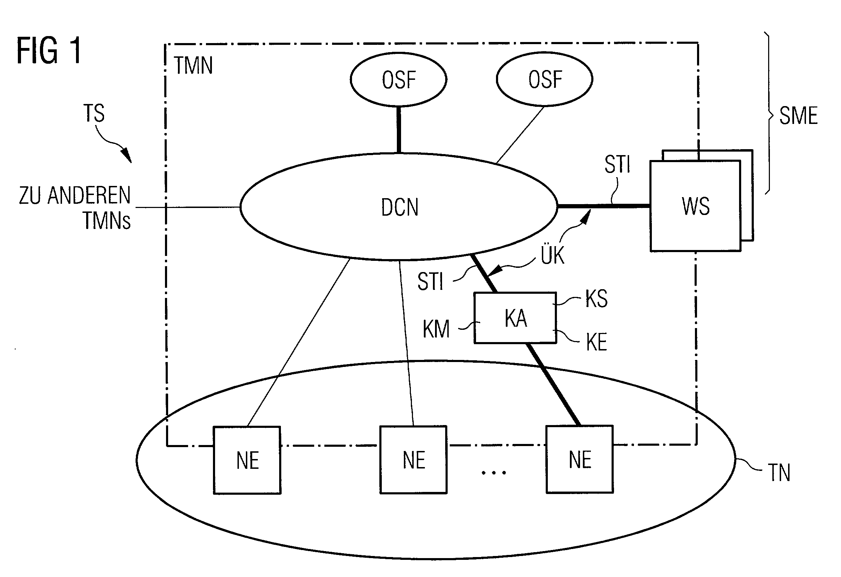

Die erfindungsgemäße Einrichtung zeigt Fig. 1 in einer vereinfachten Blockdarstellung. Ein Telekommunikationssystem TS umfasst mehrere Netze, ein Telekommunikationsnetz TN, ein Telekommunikationsmanagement-Netzwerk TMN und ein Daten-Kommunikations-Netzwerk DCN. Letzteres stellt Verbindungswege bereit, sogenannte Übertragungskanäle ÜK, welche die Service-Management-Einrichtungen SME mit Netzwerk-Elementen NE des Netzes TN verbinden. Jeder Übertragungskanal dient zur Übertragung von Steuerinformationen, das sind Daten oder Dateneinheiten, welche interaktiv zwischen Knotenpunkten des Telekommunikations-Netzwerks und dem Telekommunikations-Management-Netzwerk ausgetauscht werden. In Fig. 1 sind die Netze vereinfacht dargestellt. Ein Telekommunikations-Netzwerk TN besteht i.d.R. aus mehreren tausend Netzwerk-Elementen NE die ihrerseits wieder eine Vielzahl von Nutzkanalverbindungen vermitteln. Die Netze können mit anderen in Fig. 1 nicht weiter dargestellten Netzen vernetzt sein (in Fig. 1 ist diese durch die mit "zu anderen TMN's" gekennzeichnete Verbindung angedeutet). Unter einem Übertragungskanal ist sowohl eine leitungsgebundene als auch eine drahtlose Verbindung, wie sie beispielsweise eine Funkverbindung darstellt, zu verstehen. Die Steuerung des TN erfolgt durch das Telekommunikations-Management-Netzwerk TMN, welches über sogenannte Service-Management-Einrichtungen SME auf das Prozessgeschehen im Netz TN steuernd einwirkt. Die Service-Management-Einrichtungen SME beinhalten in der Regel Workstations WS, die eine interaktive Einflussnahme auf das Netz ermöglichen. Zum Zweck der Aufzeichnung, der Koordination und der Überwachung umfasst das Netzwerk TMN neben Workstations WS auch sogenannte Funktionseinheiten des Betriebssystems, sogenannte operations system functions, OSF, gemäß der Empfehlung ITU-M.3010.

In Fig. 1 ist durch Fettdruck ein Übertragungskanal ÜK hervorgehoben. Dieser Kanal verbindet ein Netzwerk-Element mit einer Workstation WS. Gemäß der Erfindung ist in diesen Nachrichtenweg ein Komriunikationsadapter KA geschaltet der unterschiedliche Kommunikationssystemarchitekturen, die in diesem Übertragungskanal für die Übermittlung der Steuer-Informations-Einheiten STI verwendet werden, anpasst. Diese Anpassung kann beispielsweise die Anpassung an unterschiedliche Transferprotokolle und unterschiedliche Übertragungsraten sein. Der Kommunikationsadapter bildet dann eine Buffer/Konverter. Der Adapter ist eine Zusatzeinrichtung zu einem Netzwerkelement und erfüllt ausschließlich eine Anpassungsfunktion. Eine interaktive Einflussnahme auf das Prozessgeschehen, wie dies ein Communication-Server oder eine Service-Management-Einrichtung ermöglicht, erfolgt mit dem Kommunikationsadapter nicht. Örtlich gesehen ist der Kommunikationsadapter in der Nähe der Netzwerkelemente angeordnet. Bevorzugt wird eine Entfernung zwischen Vermittlungseinrichtungen und Kommunikationsadapter von eineigen hundert Metern. Es ist auch vorstellbar, dass der Kommunikationsadapter gerätetechnisch in das Vermittlungssystem integriert ist. Als Baugruppe oder Modul aufgebaut ist die Installation und die Inbetriebnahme des Adapters einfach. Der Adapter ist frei von Virusbefall.

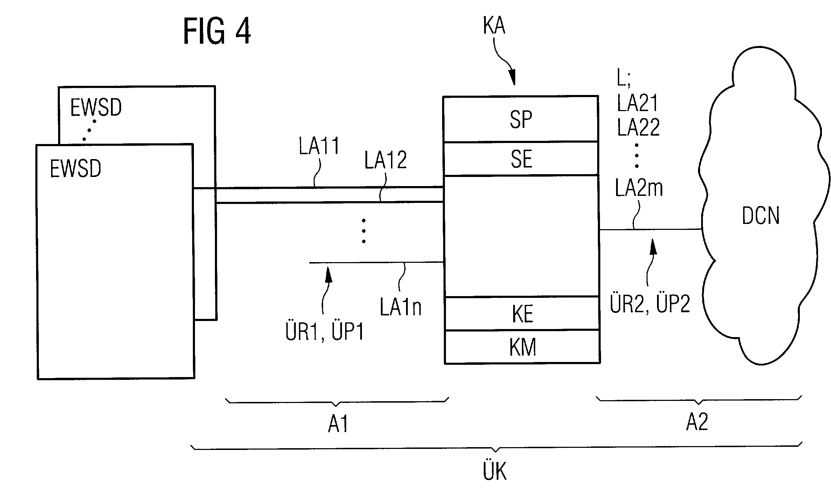

Physikalisch gesehen kann der Kommunikationsadapter durch Software, durch Hardware oder durch eine Mischform, eine sog. Firmware realisiert sein.
In einer bevorzugte Ausgestaltung der Erfindung umfasst der Kommunikationsadapter sowohl Hardware- als auch Software-Funktionseinheiten. Diese bilden eine Speicher- und eine Konvertierungseinrichtung, KS und KE, welche während einer Informationsübermittlung Daten oder Datenpakete in einem Speicher SP zwischenspeichern, bzw. mittels eines Konvertierungsmodule KM eine Übersetzung von Übertragungsprotokollen durchführen (Fig. 4). Das Konvertierungsmodul KM kann materiell durch ein oder durch mehrere Computerprogramme gebildet sein.
Fig. 4 zeigt eine Detaildarstellung der Erfindung. Der Übertragungskanal ÜK gliedert sich in eine ersten Abschnitt A1 und in einen zweiten Abschnitt A2. Ersterer umfasst physikalisch gesehen die Leitungen LA11, LA12, ... LA1n welche die dargestellten Vermittlungseinrichtungen EWSD mit einem Kommunikationsadapter KA verbinden (In der Darstellung in Fig. 4 sind beispielhaft zwei EWSD gezeigt). Die Leitungen LA11, LA12, ... ,LA1n übertragen zwischen den Vermittlungssystemen EWSD und dem Adapter KA Steuerinformationen, deren Übertragungsrate ÜR1 unterschiedlich zur Übertragungsrate ÜR2 ist, mit der diese Informationen im zweiten Abschnitt A2, zwischen Adapter KA und dem Netz DCN, übertragen werden. In Fig. 4 ist im zweiten Abschnitt A2 eine Leitung gezeichnet. Diese Leitung kann physikalisch gesehen beispielsweise eine einzige Breitbandleitung, eine Ethernet-Leitung sein. Selbstverständlich kann aus Gründen der Redundanz eine weitere Breitbandleitung parallel zu dieser verlaufen. In dem in Fig. 4 gezeigten Beispiel ist auch das Übertragungsprotokoll ÜP1 des ersten Abschnittes A1 unterschiedlich zu dem Übertragungsprotokoll ÜP2 im zweiten Abschnitt A2.
Das bevorzugte Anwendungsgebiet der Erfindung ist die effiziente und zuverlässige Vernetzung installierter und aktuell eingesetzter Vermittlungssysteme mit einem Netzwerk-Management. Bei diesen EWSD-Stationen sind pro Einheit standardmäßig mehrer X.25-Leitungen für das Netzwerk-Management vorgesehen. Der Kommunikationsadapter der Erfindung fasst mehrere dieser 64 kbit/s Standardleitungen zusammen und übersetzt den Datenstrom in einen 100 Mbit/s Datenstrom TCP/IP Format. In Richtung der Service-Mangement-Einrichtungen gesehen können dank der Erfindung mehrer Datentransfers gleichzeitig durchgeführt werden. Im Übertragungskanal können pro Zeiteinheit größere Datenmengen übertragen werde. Der Systemzustand des Telekommunikations-Netzwerkes ist besser erfassbar, die Steuerung und Führung des Netzes effizienter.
Vorteile der Erfindung werden beispielsweise dann deutlich wenn folgenden Datenarten im Netz übermittelt werden: i) Mass-Daten, das sind eine Menge Daten (z.B.:100.000 Teilnehmer, oder Einrichtung neuer Leitungen), die dem System schnell übermittelt werden müssen, um die Reaktionszeit des Betreibers zu senken. ii) Billing-Daten, das sind Gebührendaten, die für jeden Teilnehmer anfallen und zu regelmäßigen Zeiten heruntergeladen werden müssen, um sie zu vergebühren. Für jedes Gespräch können mehrere Tickets anfallen, das ergibt bei vielen Teilnehmern sehr große Files (im Monat ca. 100-1.000 Mio. Tickets, je nach Betreiber).

Durch das standardisierte TCP/IP Protokoll können Service-Management-Einrichtungen Dienstesanforderungen im Rundsende-Verfahren (Broadcasting) an mehrerer EWSD's gleichzeitig und mit vergleichsweise höherer Geschwindigkeit absetzen. Als Service können die angesprochenen EWSD ihre Dienstleistung in Form von File und Konfigurationsdaten im Zwischenspeicher ablegen. Dieser Zwischenspeicher kann dann im TCP/IP-Protokoll, beispielsweise durch Polling abgefragt und ausgelesen werden. Von Vorteil ist hierbei wenn sowohl der Broadcast-Transfer als auch der Transfer der File- und Konfigurationsdaten von der EWSD zur Service-Management-Einrichtung in der standardisierten Sprache MML Cmd (Man Machine Language erfolgt.

Die Erfindung ermöglicht eine schnellere, zuverlässigere Datenübertragung zwischen Netzwerkelementen und dem Netzwerkmanagement. Durch die Zusammenfassung mehrerer langsamer Leitungen (X.25) und durch die Buffer von Daten erreicht man eine effizientere Ausnutzung der Leitungskapazitäten.

Durch die direkte Anbindung an das Internet, entfallen Aufwendungen für den Betrieb eines Netzwerks, welches - wie im Stand der Technik erforderlich - den Communications-Server mit den Vermittlungssystemen verbindet. Durch den Wegfall dieses Netzes erhöht sich nicht nur die Systemzuverlässigkeit sondern es entstehen auch geringere Betriebskosten. Durch die geringeren Betriebskosten kann der Betreiber des Telekommunikationsnetzes die erbrachten Dienstleistungen vorteilhaft weitergegeben.

Bezugszeichenliste:
- TN: Telekommunikationsnetz
- TMN: Telekommunikations-Management-Netzwerk
- DCN: Daten-Kommunikations-Netzwerk
- STI: Steuerinformationseinheiten
- TS: Telekommunikationssystems
- SME: Service-Management-Einrichtungen
- KA: Kommunikationsadapter
- OSF: Betriebssystem-Funktionseinheit
- WS: Workstation-Funktionseinheit
- NE: Netzwerkelement
- ÜK: Übertragungskanal
- KA: Kommunikationsadapter
- SE: Speichereinrichtung
- SP: Speicher
- KE: Konvertereinrichtung
- KM: Konvertierungsmodul
- ÜP1: erstes Übertragungsprotokoll
- ÜP2: zweites Übertragungsprotokoll
- ÜR1: erste Übertragungsrate
- ÜR2: zweite Übertragungsrate
- EWSD: Vermittlungssystem
- A1: erster Abschnitt
- A2: zweiter Abschnitt
- LA11: erste Leitung der ersten Übertragungsleitungen
- LA12: zweite Leitung der ersten Übertragungsleitungen
- LA1n: n-te Leitung der ersten Übertragungsleitungen
- L: eine Leitung der zweiten Übertragungsleitungen
- LA21: erste Leitung der zweiten Übertragungsleitungen
- LA22: zweite Leitung der zweiten Übertragungsleitungen
- LA2m: m-te Leitung der zweiten Übertragungsleitungen
- X.25: Übertragungsprotokoll des Transportsystems X.25
- TCP/IP: Telekommunikationsprotokoll / Internetprotokoll

## Patentansprüche

1. Einrichtung zum Steuern eines aus mehreren Netzen (TN, TMN, DCN) bestehenden Telekommunikationssystems (TS) umfassend Service-Management-Einrichtungen (SME(OSF, WS)) und Netzwerkelemente (NE) die über Übertragungskanäle (ÜK) eines Datenkommunikationsnetzwerks (DCN) zur Informationsübermittlung miteinander verbindbar sind um Steuerinformationseinheiten (STI) zu übertragen, **dadurch gekennzeichnet, dass** in zumindest einem Übertragungskanal (ÜK) ein Kommunikationsadapter (KA) vorhanden ist um in diesem Übertragungskanal (ÜK) verwendete unterschiedliche Kommunikationssystemarchitekturen aneinander anzupassen.

2. Einrichtung nach Anspruch 1, **dadurch gekennzeichnet, dass** der Kommunikationsadapter (KA) eine Speichereinrichtung (SE) mit einem Speicher (SP) enthält in welchem Steuerinformationseinheiten (STI) zwischenspeicherbar sind.

3. Einrichtung nach Anspruch 1 oder nach Anspruch 1 und 2, **dadurch gekennzeichnet, dass** der Kommunikationsadapter (KA) eine Konvertereinrichtung (KE) enthält welche mindestens ein Konvertierungsmodul (KM) umfasst, welches bei der Informationsübermittlung die übertragenen Steuerinformationseinheiten (STI) von einem ersten Übertragungsprotokoll (ÜP1) und / oder einer ersten Übertragungsrate (ÜR1) in ein zweites Übertragungsprotokoll (ÜP2) und / oder zweite Übertragungsrate (ÜR2) umsetzt.

4. Einrichtung nach einem der Ansprüche 1 bis 3, **dadurch gekennzeichnet, dass** bei der Informationsübermittlung die Steuerinformationseinheiten (STI) zu Datenpaketen zusammengefasst sind.

5. Einrichtung nach einem der Ansprüche 1 bis 4, **dadurch gekennzeichnet, dass** zumindest eine Service-Management-Einrichtungen (SME(OSF, WS)) über den zumindest einen Übertragungskanal (ÜK) mit zumindest einem Netzwerkelement (NE) das als Vermittlungssystem (EWSD) ausgebildet ist verbunden ist.

6. Einrichtung nach Anspruch 5, **dadurch gekennzeichnet, dass** die zumindest eine Service-Management-Einrichtung (SME(OSF, WS)), der Kommunikationsadapter (KA) und das zumindest eine Vermittlungssystem (EWSD) innerhalb eines Client-Server-Systems in einer asymmetrischen Auftragsbeziehung stehen.

7. Einrichtung nach Anspruch 5 oder 6, **dadurch gekennzeichnet, dass** der zumindest eine Übertragungskanal (ÜK) einen ersten Abschnitt (A1), enthaltend eine Anzahl n erste physikalische Übertragungsleitungen (LA11, LA12, ..., LA1n) welche das Vermittlungssystem (EWSD) mit dem Kommunikationsadapter (KA) verbinden, und einen zweiten Abschnitt (A2), enthaltend eine oder eine Anzahl m zweite physikalische Übertragungsleitung oder Übertragungsleitungen (L; LA21, LA22, ... ,LA2m) welche den Kommunikationsadapter (KA) mit der zumindest einen Service-Management-Einrichtung (SME(OSF, WS)) verbindet oder verbinden, umfasst, wobei die Anzahl n größer ist als die Anzahl m.

8. Einrichtung nach Anspruch 7, **dadurch gekennzeichnet, dass** die ersten Übertragungsleitungen (LA11, LA22, ..., LA1n) eine erste Bandbreite aufweisen die kleiner ist als eine zweite Bandbreite der zweiten Übertragungsleitungen (LA21, LA22, ... ,LA2m)und dass bei der Informationsübermittlung die Übertragungsrate (ÜR1) der Datenpakete auf den ersten Übertragungsleitungen (LA11, LA12, ..., LA1n) kleiner ist als die Übertragungsrate (ÜR2) auf der oder den zweiten Übertragungsleitungen (L; LA21, LA22, ... , LA2m).

9. Einrichtung nach Anspruch 8, **dadurch gekennzeichnet, dass** die Übertragung der Datenpakete auf den ersten Übertragungsleitungen (L1, L2, ..., Ln) im Leitungsprotokoll X.25 und auf der oder den zweiten Übertragungsleitung (L; LA21, LA22, ... ,LA2m) im Leitungsprotokoll TCP/IP erfolgt.

10. Verfahren zum Steuern eines aus mehreren Netzen bestehenden Telekommunikationssystems (TS) nach einem der Ansprüche 1 bis 9, mit folgenden Schritten:
Herstellen einer Verbindung zwischen zumindest einer Service-Management-Einrichtung (SME(OSF, WS)) und zumindest einem Netzwerkelement (NE) durch zumindest einen Übertragungskanal (ÜK) eines Datenkommunikationsnetzwerks (DCN);
Übertragen von Steuerinformationseinheiten (STI) zwischen der zumindest einen Service-Management-Einrichtung SME((OSF, WS)) und dem zumindest einen Netzwerkelement (NE) auf dem zumindest einen Übertragungskanal (ÜK), wobei im Übertragungskanal (ÜK) ein Kommunikationsadapter (KA) unterschiedliche Kommunikationssystemarchitekturen aneinander anpasst.

11. Verfahren nach Anspruch 10, **dadurch gekennzeichnet, dass** die Steuerinformationseinheiten STI zu Datenpaketen zusammen gefasst werden und mit einer ersten Übertragungsrate (ÜR1) im ersten Abschnitt (A1) und mit einer zweiten Übertragungsrate (ÜR2) im zweiten Abschnitt (A2) des Übertragungskanals (ÜK) übertragen werden, wobei die erste Übertragungsrate (ÜR1) kleiner als die zweite Übertragungsrate (ÜR2) ist und Steuerinformationseinheiten (STI) in einem Speicher (SP) einer Speichereinrichtung (SE) des Kommunikationsadapters (KA) zwischengespeichert werden.

12. Verfahren nach Anspruch 10 oder 11, **dadurch gekennzeichnet, dass** mittels eines Konvertierungsmoduls (KM) welches in einer Konvertiereinrichtung (KE) des Kommunikationsadapters (KA) vorhanden ist, ein erstes Übertragungsprotokoll (ÜP1), mit welchem die Steuerinformationseinheiten (STI) in einem ersten Abschnitt (A1) des Übertragungskanals (ÜK) übertragen werden, in ein zweites Übertragungsprotokoll (ÜP2), mit welchem die Steuerinformationseinheiten (STI) in einem zweiten Abschnitt (A2) des Übertragungskanals (ÜK) übertragen werden, umgesetzt wird.

13. Verfahren nach Anspruch 12, **dadurch gekennzeichnet, dass** die Datenpakete im ersten Abschnitt (A1) auf ersten physikalische Übertragungsleitungen (LA11, LA12, ... ,LA1n) in einem ersten Leitungsprotokoll (ÜP1) und im zweiten Abschnitt (A2) auf einer oder mehreren zweiten physikalischen Übertragungsleitungen (L; LA21, LA22, ... , LA2m) in einem zweiten Leitungsprotokoll (ÜP2) übertragen werden und der Kommunikationsadapter (KA) einen Konzentrator für die auf den ersten Übertragungsleitungen (LA11, LA12, ..., LA1n) übertragenen Datenpaketen bildet.
